# EUROPÄISCHE PATENTANMELDUNG

(11) **EP 4 807 542 A1**
(43) Veröffentlichungstag der Anmeldung: **16.09.2026**
(21) Anmeldenummer: 26155248.3
(22) Anmeldetag: 30.01.2026
(51) Int. Cl.: G06F 9/445

(54) **VERFAHREN ZUR IMPLEMENTIERUNG UND/ODER AUSFÜHRUNG EINER DRITTSOFTWARE AUF EINEM HAUSHALTSGERÄT UND HAUSHALTSGERÄT**

(30) Priorität: 12.03.2025 LU 600535
(71) Anmelder: Miele & Cie. KG, 33332 Gütersloh (DE)
(72) Erfinder: Köpp, Lukas, 33378 Rheda-Wiedenbrück (DE)

(57) **Zusammenfassung**

Die Erfindung betrifft ein Verfahren und ein Haushaltsgerät (100) zur Implementierung und/oder Ausführung einer Drittsoftware (112, 114, 116, 118) auf dem Haushaltsgerät (100), umfassend die Schritte: Integrieren einer Laufzeitumgebung (104) unter Verwendung eines Software Development Kits, SDK, (106) auf dem Haushaltsgerät (100), Bereitstellen mindestens einer Schnittstelle (108) zu einer Gerätesoftware (110, 120, 122, 124, 126) des Haushaltsgerätes (100) über das SDK (106), und Implementieren und/oder Ausführen einer Drittsoftware (112, 114, 116, 118) unter Verwendung der mindestens einen Schnittstelle (108), wobei die Drittsoftware (112, 114, 116, 118) unabhängig von der Gerätesoftware (110, 120, 122, 124, 126) in der Laufzeitumgebung (104) ausführbar ist.

## Beschreibung

Die Erfindung betrifft ein Verfahren zur Implementierung und/oder Ausführung einer Drittsoftware auf einem Haushaltsgerät. Ferner betrifft die Erfindung ein solches Haushaltsgerät. Auch betrifft die Erfindung ein Computerprogrammprodukt sowie ein computerlesbares Medium, auf dem das Computerprogrammprodukt gespeichert ist.

Haushaltsgeräte bieten heutzutage eine Vielzahl an Funktionen und Features, die den Alltag der Nutzer komfortabler und effizienter gestalten. Dennoch bestehen in nahezu allen Haushaltsbereichen individuelle Vorlieben und Bedürfnisse, die sich durch teils schnelllebige Trends stetig verändern. Die herkömmliche Softwarearchitektur von Haushaltsgeräten ist jedoch nicht darauf ausgelegt, flexibel auf diese Veränderungen zu reagieren. Lange Entwicklungs-, Test- und Releasezyklen, die mit hohen Kosten verbunden sind, erschweren die Einführung neuer Funktionalitäten erheblich.

Selbst wenn neue Funktionen über Update- und/oder Upgrade-Mechanismen auf das Haushaltsgerät gebracht oder nachträglich aktiviert werden, bleiben sie stets Bestandteil der Gerätesoftware. Dies führt zu langen Iterationszyklen, die im Kontext digitaler Produkte und Features nicht konkurrenzfähig sind. Ein weiteres Hindernis besteht darin, dass externe Partner oder Drittanbieter keine Möglichkeit haben, eigenständige Funktionalitäten auf die Geräte zu bringen, wodurch Innovationen und marktspezifische Anpassungen erschwert werden. Zudem sind Nischenfunktionen für Hersteller wirtschaftlich oft nicht attraktiv, was dazu führt, dass spezialisierte Anforderungen von Endnutzern häufig unberücksichtigt bleiben.

Die Entwicklung neuer Funktionen erfordert darüber hinaus tiefgehende Kenntnisse über die Struktur und Funktionsweise der bestehenden Gerätesoftware. Dies stellt eine hohe Einstiegshürde dar und führt zu einem erheblichen Risiko, dass neue Features bestehende Funktionalitäten beeinträchtigen oder fehlerhaft implementiert werden. Um solche Risiken zu minimieren, sind umfassende und kostspielige Testreihen erforderlich, bevor neue Funktionen ausgerollt werden können.

Vor diesem Hintergrund ist es vorliegend eine Aufgabe, ein verbessertes Verfahren und/oder ein verbessertes Haushaltsgerät anzugeben.

Erfindungsgemäß wird dieses Problem durch ein Verfahren mit den Merkmalen des Patentanspruchs 1 gelöst. Erfindungsgemäß wird dieses Problem durch ein Haushaltsgerät mit den Merkmalen des Patentanspruchs 13 gelöst. Vorteilhafte Ausgestaltungen und Weiterbildungen der Erfindung ergeben sich aus den nachfolgenden Unteransprüchen.

Demgemäß wird ein Verfahren zur Implementierung und/oder Ausführung einer Drittsoftware auf einem Haushaltsgerät vorgeschlagen. Das Verfahren umfassend die Schritte: Integrieren einer Laufzeitumgebung unter Verwendung eines Software Development Kits, SDK, auf dem Haushaltsgerät, Bereitstellen mindestens einer Schnittstelle zu einer Gerätesoftware des Haushaltsgerätes über das SDK, und Implementieren und/oder Ausführen einer Drittsoftware unter Verwendung der mindestens einen Schnittstelle, wobei die Drittsoftware unabhängig von der Gerätesoftware in der Laufzeitumgebung ausführbar ist.

Ferner wird ein Haushaltsgerät vorgeschlagen, umfassend ein Softwaremodul zum Integrieren einer Laufzeitumgebung unter Verwendung eines Software Development Kits, SDK, auf dem Haushaltsgerät, wobei das Softwaremodul mindestens eine Schnittstelle zu einer Gerätesoftware des Haushaltsgerätes über das SDK bereitstellt, und wobei durch das Softwaremodul eine Drittsoftware unter Verwendung der mindestens einen Schnittstelle implementierbar und/oder ausführbar ist, wobei die Drittsoftware unabhängig von der Gerätesoftware in der Laufzeitumgebung ausführbar ist.

Unter "Drittsoftware" ist jegliche Software zu verstehen, die nicht unbedingt von dem Gerätehersteller selbst stammt, und/oder die nicht in der Gerätesoftware umfasst ist.

Eine Laufzeitumgebung bezeichnet vorzugsweise die technische Umgebung, in der eine Softwareanwendung ausgeführt wird, und umfasst alle notwendigen Komponenten wie Betriebssystem, Interpreter oder virtuelle Maschinen sowie Laufzeitbibliotheken, die zur korrekten Funktion der Software erforderlich sind.

Ein Software Development Kit (SDK) stellt vorzugsweise eine Sammlung von Entwicklungswerkzeugen, Programmierschnittstellen (APIs), Dokumentationen und Bibliotheken bereit, die Entwicklern die Erstellung, Implementierung und Wartung von Software für eine bestimmte Plattform oder ein bestimmtes System erleichtern.

Die Schnittstelle zu einer Gerätesoftware über das SDK ermöglicht vorzugsweise eine standardisierte Interaktion zwischen einer Anwendung und der zugrunde liegenden Hardware oder Firmware, indem sie entsprechende APIs, Treiber oder Middleware bereitstellt, um gerätespezifische Funktionen wie Sensordatenzugriff, Kommunikationsprotokolle oder Steuerungsmechanismen nutzbar zu machen.

Die Gerätesoftware zur Steuerung des Haushaltsgerätes bleibt somit vorliegend grundsätzlich bestehen, ohne dass Änderungen für eine Funktionserweiterung zwingend notwendig sind. Hierzu wird die Laufzeitumgebung in das Haushaltsgerät integriert, in der Zusatzfunktionen und/oder diese abbildenden Softwareprogramme ausführbar sind.

Das Haushaltsgerät kann ein Backofen oder ein Dampfgarer oder ein Kochfeld oder eine Dunstabzugshaube oder ein Geschirrspüler oder eine Waschmaschine oder ein Wäschetrockner oder eine Waschtrockner-Kombination oder ein Kühlschrank oder eine Gefriertruhe oder ein Gefrierschrank oder eine Kühl-Gefrier-Kombination oder eine Kaffeemaschine oder ein Staubsauger oder ein Saugroboter oder ein Dampfbügelsystem oder ein Weinschrank oder Küchenmaschinen/Kochautomaten sein.

Mit dem SDK-Ansatz wird die Möglichkeit geschaffen, neue Funktionen und/oder Features unabhängig von der Gerätesoftwareentwicklung für das Haushaltsgerät verfügbar zu machen. Die Gerätesoftware kann somit stabil, lauffähig und vorzugsweise unverändert bestehen bleiben. Neue Funktionalitäten werden vorzugsweise mit dem Haushaltsgerät aus der SDK-Laufzeitumgebung heraus über die mindestens eine Schnittstelle bereitgestellt. Die Kosten und Aufwände für die Entwicklung einer neuen Funktion werden somit deutlich reduziert und das Risiko von Fehlern beim Rollout stark reduziert bzw. die Störung von bestehender Funktionalität wird sogar ausgeschlossen. Ein Rollout bezeichnet dabei vorzugsweise den kontrollierten und schrittweisen Prozess der Einführung oder Bereitstellung einer neuen Software, eines Updates und/oder einer technischen Lösung in einer IT-Umgebung des Haushaltsgerätes. Dabei erfolgt die Verteilung vorzugsweise in mehreren Phasen, um mögliche Probleme frühzeitig zu identifizieren und die Stabilität sowie die Kompatibilität mit bestehenden Systemen sicherzustellen. Da die Kommunikation solcher "neuen" Funktionen mit dem Haushaltsgerät über die mindestens eine Schnittstelle funktioniert, ist nur eine geringe Kenntnis über die Architektur der Gerätesoftware des Haushaltsgeräts notwendig. Somit kann ein Onboarding von Entwicklungsressourcen beschleunigt werden. Onboarding bezeichnet dabei vorzugsweise den strukturierten und gezielten Prozess der Einführung neuer Benutzer, Kunden oder Mitarbeiter in ein System oder eine Software.

Das SDK ermöglicht vorzugsweise Software-Entwicklern, in einer gängigen Programmiersprache zu entwickeln und unterstützt vorzugsweise moderne Rollout-Verfahren. Drittsoftware, beispielsweise in Form von Apps, kann über einen Appstore auf dem Haushaltsgerät oder in der Geräte-eigenen-App auf dem Smartphone für das jeweilige Haushaltsgerät heruntergeladen und vorzugsweise automatisch installiert werden. Vorzugsweise sind über die Laufzeitumgebung und/oder die SDK und/oder die Schnittstelle auch automatische Update-Mechanismen für die jeweilige Drittsoftware verfügbar.

Vorliegend kann eine Beschleunigung und Kostenreduktion bei der Entwicklung von digitalen Features und Funktionen im Kontext der Haushaltsgeräte durch Reduktion der Testaufwände, Reduktion der Komplexität der Entwicklung und/oder Entkopplung der Feature-Entwicklung der Geräte-Software-Entwicklung erreicht werden. Ferner kann eine Individualisierung der Haushaltsgeräte aufgrund von installierter Software ermöglicht werden, was die Nutzerakzeptanz erhöht. Ferner können Partner und/oder Drittanbieter Funktionen auf die Haushaltsgeräte aufbringen, die ggf. für den Hersteller der Haushaltsgeräte unwirtschaftlich oder strategisch nicht interessant genug sind, um diese selbst zu entwickeln. Für Partner und/oder Drittanbieter können derartige Nischen jedoch sehr interessant sein. Durch die Vergabe von Partner-Lizenzen kann so ein weiteres Umsatzpotential für den Haushaltsgerätehersteller erreicht werden. Ferner können Nutzer kurzfristig neue Funktionen auf ihr Haushaltsgerät aufspielen und so die Gerätefunktion bzw. den Funktionsumfang erweitern.

In einem weiteren Aspekt wird vorgeschlagen, dass das Verfahren ferner ein Zugreifen durch die Drittsoftware über die mindestens eine Schnittstelle auf mindestens eine Funktion und/oder einen, insbesondere einstellbaren, Geräteparameter des Haushaltsgerätes aufweist.

Das SDK ermöglicht den Zusatzfunktionen bzw. Softwareprogrammen, über Schnittstellen Funktionen des Haushaltsgerätes zu steuern, beispielhaft eine Programmauswahl, eine Temperatureinstellung und/oder eine Start- und Endzeit, etc. Weiterhin kann über die mindestens eine Schnittstelle auch auf Sensordaten, zum Beispiel auf eine Garraum-Temperatur, eine Feuchtigkeit, ein Kamerabild, einen Stromverbrauch, einen Wasserverbrauch und/oder einen Zählerstand, etc., zugegriffen werden. Selbstredend ist diese Auflistung nicht einschränkend zu verstehen.

In einem weiteren Aspekt wird vorgeschlagen, dass das Verfahren ein Abfragen durch die Drittsoftware über die mindestens eine Schnittstelle auf einen Gerätestatus des Haushaltsgerätes aufweist.

Ferner kann über die mindestens eine Schnittstelle ein aktueller Gerätestatus abgefragt werden. Der Gerätestatus kann beispielsweise aufweisen, dass das Haushaltsgerät angeschaltet ist, oder das Haushaltsgerät ausgeschaltet ist, oder dass das Haushaltsgerät eine vorbestimmte Betriebsart hat, oder dass das Haushaltsgerät eine gewisse Restzeit in einem Status verbleibt, oder dass das Haushaltsgerät zu einer bestimmten Endzeit einen Gerätestatus wechselt, oder dass das Haushaltsgerät zu einer bestimmten Startzeit einen Gerätestatus wechselt, und/oder dass das Haushaltsgerät online oder offline ist, etc.

In einem weiteren Aspekt wird vorgeschlagen, dass das ferner ein Zugreifen durch die Drittsoftware über die mindestens eine Schnittstelle auf Sensorinformationen eines Gerätesensors des Haushaltsgerätes aufweist.

Der Gerätesensor kann einen Temperatursensor und/oder einen Drucksensor und/oder einen Feuchtigkeitssensor und/oder einen Ultraschallsensor und/oder eine Kamera und/oder einen Wärmebildsensor und/oder einen Infrarotsensor und/oder einen Bewegungssensor und/oder einen Time-of-Flight-(ToF)-Sensor und/oder einen Beschleunigungssensor und/oder einen Intertialsensor und/oder einen Näherungssensor und/oder einen Berührungssensor und/oder einen Kraftsensor aufweisen. Die Auflistung ist nicht einschränkend zu verstehen, da grundsätzlich jegliche Art von Sensorinformationen, die von einem Gerätesensor des Haushaltsgerätes erfasst werden, über die mindestens eine Schnittstelle bereitgestellt werden können. Besonders bevorzugt kann der Gerätehersteller des Haushaltsgerätes den Zugriff auf die Sensorinformationen spezifisch einschränken und/oder freigeben.

In einem weiteren Aspekt wird vorgeschlagen, dass das ferner ein Steuern und/oder Anpassen durch die Drittsoftware über die mindestens eine Schnittstelle einer Funktion des Haushaltsgerätes aufweist.

Das SDK ermöglicht der Drittsoftware beispielsweise neben dem Zugriff auf zumindest Teile der Gerätedaten auch, zumindest teilweise eine Gerätesteuerung zu übernehmen. Hierbei kann insbesondere eine Anzeige von Inhalten und/oder eine Interaktion des Nutzers mit solchen Inhalten durch das Haushaltsgerät über die Drittsoftware gesteuert werden. Dies kann beispielsweise auch mittels PopUps und/oder mittels spezifischer Menü-Items und/oder mittels spezifischer Bildschirminhalte und/oder mittels Überlagerungen und/oder Überblendungen von Informationen (sog. Overlays) und/oder mittels einer spezifischen Menüstruktur und/oder mittels spezifischer Drittsoftware-Inhalte, etc. erfolgen. Ferner kann zum Steuern ein Zugriff auf eine Kommunikationshardware, wie NFC, Bluetooth, Wi-Fi, des Haushaltsgerätes ermöglicht werden.

In einem weiteren Aspekt wird vorgeschlagen, dass die Laufzeitumgebung und/oder das SDK einen Eingriff in die Gerätesoftware und/oder eine Änderung in Einstellungen der Gerätesoftware und/oder des Haushaltsgerätes durch eine Sandboxing-Technik und/oder ein Berechtigungsmanagement und/oder durch eine API-Governance- und Sicherheitsrichtlinie und/oder durch Virtualisierung und Containerisierung und/oder durch eine digitale Signatur- und Integritätsprüfung und/oder durch eine Einschränkung durch einen Read-only Zugriff und/oder durch eine Protokollierung und Überwachung und/oder durch eine Separierung von Benutzer- und Systemprozessen und/oder durch eine Kapselung von Gerätefunktionen und/oder durch einen Firmware-Hooks und Schutzmechanismus verhindert.

Die mindestens eine Schnittstelle und/oder die Gerätesoftware ist/sind vorzugsweise derart ausgebildet, dass keine Einstellungen an dem Haushaltsgerät durch die Drittsoftware vorgenommen werden können, die Sicherheitsrisiken, Fehlfunktionen und/oder ein unerwünschtes Verhalten des Haushaltsgerätes verursachen. Weiterhin schließt die Laufzeitumgebung vorzugsweise Änderungen durch Drittsoftware an der Gerätesoftware aus, um einen sicheren Betrieb des Haushaltsgerätes zu gewährleisten.

Die mindestens eine Schnittstelle kann auch in unterschiedlichen Ausprägungen freigeschaltet werden. Für Gerätehersteller-eigene Drittsoftware kann die Schnittstelle vorzugsweise ohne Einschränkungen genutzt werden. Von Partnern des Geräteherstellers kann vorzugsweise eine eingeschränkte Schnittstelle genutzt werden. Von Drittanbietern kann eine stark eingeschränkte Schnittstelle (z.B. read-only) genutzt werden.

In einem weiteren Aspekt wird vorgeschlagen, dass das Verfahren ferner ein Verwenden eines akustischen und/oder optischen Signalgebers des Haushaltsgerätes durch die Drittsoftware über die mindestens eine Schnittstelle und/oder das SDK.

Auch kann ein Zugriff auf die Steuerung von akustischen Signalgebern des Haushaltsgerätes ermöglicht werden. Ferner kann ein Zugriff auf die Steuerung der Licht-Elemente des Haushaltsgerätes ermöglicht werden.

In einem weiteren Aspekt wird vorgeschlagen, dass das SDK und die Laufzeitumgebung durch stufenweises Rollout (Canary Deployment) und/oder Blue-Green Deployment und/oder A/B-Testing und/oder automatisierte Updates und/oder Delta-Updates und/oder Rollback-Mechanismen und/oder zentrale Verwaltung und Monitoring und/oder Konsistenzprüfungen vor dem Rollout und/oder Feature Toggles (Feature Flags) und/oder Edge- oder P2P-Deployment und/oder Geräte- und Nutzersegmentierung und/oder containerisierte Bereitstellung ein Rollout-Verfahren unterstützen.

Das SDK und die Laufzeitumgebung unterstützen vorzugsweise ein stufenweises Rollout (Canary Deployment), indem die Software schrittweise an ausgewählte Geräte oder Nutzer ausgerollt wird, um mögliche Fehler frühzeitig zu erkennen. Das Blue-Green Deployment ermöglicht vorzugsweise das parallele Betreiben zweier Versionen, um unterbrechungsfreie Updates und/oder Rollbacks zu gewährleisten. A/B-Testing erlaubt vorzugsweise den Vergleich verschiedener Softwarevarianten zur Optimierung der Benutzererfahrung. Automatisierte Updates stellen vorzugsweise eine kontinuierliche und/oder zeitgesteuerte Aktualisierung sicher, während Delta-Updates vorzugsweise nur geänderte Komponenten übertragen, um Bandbreite zu sparen. Rollback-Mechanismen ermöglichen vorzugsweise, fehlerhafte Updates rückgängig zu machen. Eine zentrale Verwaltung und Monitoring ermöglichen vorzugsweise die Überwachung und/oder Steuerung des Rollout-Prozesses in Echtzeit. Konsistenzprüfungen stellen vorzugsweise sicher, dass Software vor dem Rollout geprüft wird. Feature Toggles ermöglichen vorzugsweise das gezielte Aktivieren und/oder Deaktivieren von Funktionen. Edge- oder P2P-Deployment unterstützen vorzugsweise die dezentrale Verteilung von Updates innerhalb eines Netzwerks. Die Geräte- und Nutzersegmentierung erlaubt vorzugsweise Updates nach bestimmten Kriterien. Eine containerisierte Bereitstellung sorgt vorzugsweise für eine einheitliche Laufzeitumgebung unabhängig von der zugrunde liegenden Infrastruktur.

In einem weiteren Aspekt wird vorgeschlagen, dass das SDK eine Bibliothek und/oder ein Framework und/oder eine Dokumentation und/oder eine API und/oder ein Entwicklungswerkzeug und/oder eine Entwicklungsumgebung und/oder einen Sicherheitsmechanismus und/oder eine Plattformunterstützung und/oder ein Template und/oder ein Testing- und Monitoring-Tool und/oder ein Installations- und Konfigurationsskript aufweist.

Eine Bibliothek umfasst vorzugsweise eine Sammlung von Code-Komponenten, die Funktionen bereitstellen, um die Softwareentwicklung zu vereinfachen und eine konsistente Implementierung sicherzustellen. Ein Framework bietet vorzugsweise eine strukturierte Grundlage für die Entwicklung von Softwareanwendungen, indem es vorgefertigte Komponenten und Design-Patterns bereitstellt, die die Implementierung beschleunigen und eine einheitliche Architektur fördern. Die Dokumentation umfasst vorzugsweise Beschreibungen der SDK-Funktionen, aufweisend Anwendungsbeispielen, API-Referenzen und/oder Best Practices. Eine API stellt vorzugsweise definierte Schnittstellen bereit, über die Anwendungen mit der Hardware und/oder Software des Haushaltsgeräts interagieren können. Ein Entwicklungswerkzeug umfasst vorzugsweise Anwendungen und/oder Skripte, die den Entwicklungsprozess unterstützen, wie z. B. Compiler, Debugger und/oder Build-Tools. Eine Entwicklungsumgebung bietet vorzugsweise eine integrierte Plattform zur Programmierung, Bearbeitung, Kompilierung und/oder Debugging von Anwendungen. Ein Sicherheitsmechanismus umfasst vorzugsweise Funktionen wie Zugriffskontrollen, Verschlüsselung und/oder Authentifizierungsmethoden, um die Integrität und Vertraulichkeit der Daten und Systeme zu schützen. Die Plattformunterstützung gewährleistet vorzugsweise die Kompatibilität des SDKs mit verschiedenen Betriebssystemen, Hardwareplattformen und/oder Architekturen, um eine breite Anwendbarkeit zu ermöglichen. Ein Template stellt vorzugsweise vordefinierte Strukturen und/oder Muster für Softwareprojekte bereit. Ein Testing- und Monitoring-Tool ermöglicht vorzugsweise die automatische Überprüfung der Software auf Fehler und Leistungsprobleme sowie die kontinuierliche Überwachung des Systemzustands.

Ein Installations- und Konfigurationsskript automatisiert vorzugsweise die Einrichtung und Anpassung des SDKs auf verschiedenen Entwicklungsumgebungen, um eine schnelle und fehlerfreie Inbetriebnahme zu ermöglichen.

In einem weiteren Aspekt wird vorgeschlagen, dass die Laufzeitumgebung eine virtuelle Maschine und/oder eine Container-basierte Umgebung und/oder eine Sandbox-Umgebung und/oder eine modulare Architektur und/oder eine ereignisgesteuerte Architektur und/oder Unterstützung für Multithreading und/oder ein Ressourcenmanagement und/oder eine Speicherverwaltung und/oder eine Sicherheitsisolation und/oder eine Schnittstellenverwaltung und/oder Protokollierungs- und Überwachungsfunktionen und/oder eine Fehlerbehandlung und/oder eine API-Integration und/oder eine Unterstützung für plattformübergreifende Kompatibilität und/oder eine Erweiterbarkeit durch Plug-ins aufweist.

Die Laufzeitumgebung kann vorzugsweise als virtuelle Maschine ausgebildet sein, um eine isolierte Ausführung von Anwendungen zu ermöglichen und vorzugsweise eine plattformunabhängige Bereitstellung zu gewährleisten. Die Laufzeitumgebung kann vorzugsweise als containerbasierte Umgebung ausgebildet sein, um eine effiziente Ressourcennutzung und eine schnelle Bereitstellung von Softwarekomponenten zu unterstützen. Vorzugsweise kann die Laufzeitumgebung als Sandbox-Umgebung ausgebildet sein, um Anwendungen in einer sicheren, abgeschotteten Umgebung auszuführen und unerlaubte Zugriffe auf Systemressourcen zu verhindern. Eine modulare Architektur ermöglicht vorzugsweise die flexible Anpassung und Erweiterung der Laufzeitumgebung durch die Integration von spezifischen Modulen. Die ereignisgesteuerte Architektur unterstützt vorzugsweise eine reaktionsschnelle Verarbeitung von System- und Benutzereingaben. Die Laufzeitumgebung bietet vorzugsweise Unterstützung für Multithreading, um parallele Ausführung von Prozessen zu ermöglichen und die Systemleistung zu optimieren. Ein effizientes Ressourcenmanagement sorgt vorzugsweise für eine optimale Nutzung von Hardware- und Software-Ressourcen, während eine integrierte Speicherverwaltung vorzugsweise eine effiziente Allokation und Freigabe von Speicher gewährleistet. Sicherheitsisolation gewährleistet vorzugsweise, dass Prozesse voneinander getrennt arbeiten und sensible Daten geschützt sind. Eine integrierte Schnittstellenverwaltung ermöglicht vorzugsweise eine standardisierte und/oder strukturierte Kommunikation zwischen verschiedenen Softwarekomponenten. Protokollierungs- und/oder Überwachungsfunktionen ermöglichen vorzugsweise eine detaillierte Analyse von Systemzuständen und die frühzeitige Erkennung von Fehlern. Eine API-Integration ermöglicht vorzugsweise die einfache Anbindung an externe Dienste und Anwendungen. Die Unterstützung für plattformübergreifende Kompatibilität gewährleistet vorzugsweise die Nutzung der Laufzeitumgebung auf unterschiedlichen Betriebssystemen und/oder Hardwarearchitekturen. Die Erweiterbarkeit durch Plug-ins ermöglicht vorzugsweise die einfache Anpassung an spezifische Anforderungen durch die Integration zusätzlicher Funktionalitäten.

In einem weiteren Aspekt wird vorgeschlagen, dass das Softwaremodul als ein Cloudservice und/oder als Serverservice ausgebildet ist.

Das Softwaremodul, das vorzugsweise Teil des Gerätes ist, kann vorzugsweise als ein Cloudservice und/oder als ein Serverservice ausgebildet sein, wobei vorzugsweise der Cloudservice eine skalierbare und dynamische Bereitstellung von Funktionen ermöglicht und vorzugsweise eine hohe Verfügbarkeit sowie Lastverteilung durch verteilte Rechenressourcen gewährleistet. Der Serverservice ist vorzugsweise lokal oder in einer unternehmenseigenen Infrastruktur implementiert, um eine höhere Kontrolle über die Daten und Systeme zu ermöglichen, wobei vorzugsweise Sicherheitsmechanismen zur Zugriffskontrolle und Datenverschlüsselung integriert sind. Das Softwaremodul kann vorzugsweise eine standardisierte Schnittstellenkommunikation bereitstellen, um eine nahtlose Integration mit anderen Systemen zu ermöglichen, wobei vorzugsweise eine kontinuierliche Aktualisierung und Wartung durch Over-the-Air-Updates und/oder geplante Wartungszyklen unterstützt wird. Unabhängig von der Bereitstellungsform kann das Softwaremodul vorzugsweise eine zentrale Überwachungs- und Verwaltungsfunktion bieten, um Betriebszustände zu erfassen und Optimierungen vorzunehmen, wobei vorzugsweise eine plattformunabhängige Nutzung durch Web- oder API-basierte Zugriffsmöglichkeiten gewährleistet wird.

Die Erfindung umfasst auch ein Computerprogrammprodukt, umfassend Befehle, die bei der Ausführung des Verfahrens durch einen Computer bewirken, dass der Computer das Verfahren ausführt.

Die Erfindung umfasst daneben ein computerlesbares Medium, auf dem das Computerprogrammprodukt gespeichert ist.

Ein Ausführungsbeispiel der Erfindung ist in den Zeichnungen rein schematisch dargestellt und wird nachfolgend näher beschrieben. Es zeigt
- Figur 1: ein schematisches Blockdiagramm eines Ausführungsbeispiels eines vorliegenden Haushaltsgerätes, und
- Figur 2: ein schematisches Flussdiagramm eines Ausführungsbeispiels des vorliegenden Verfahrens.

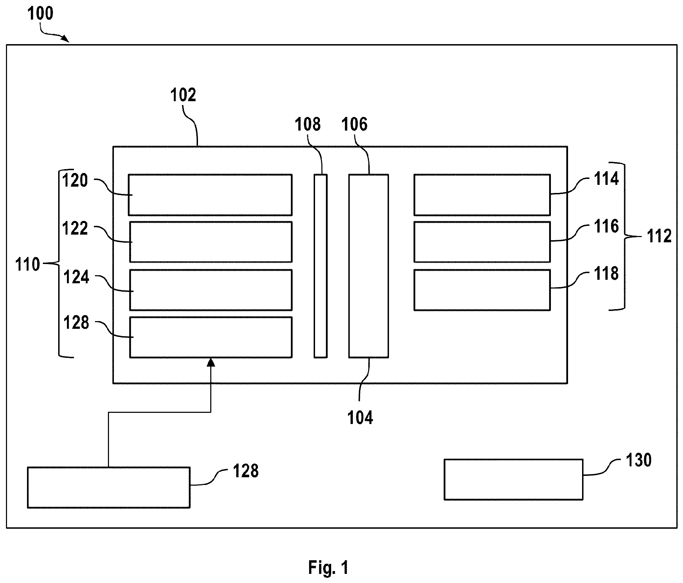

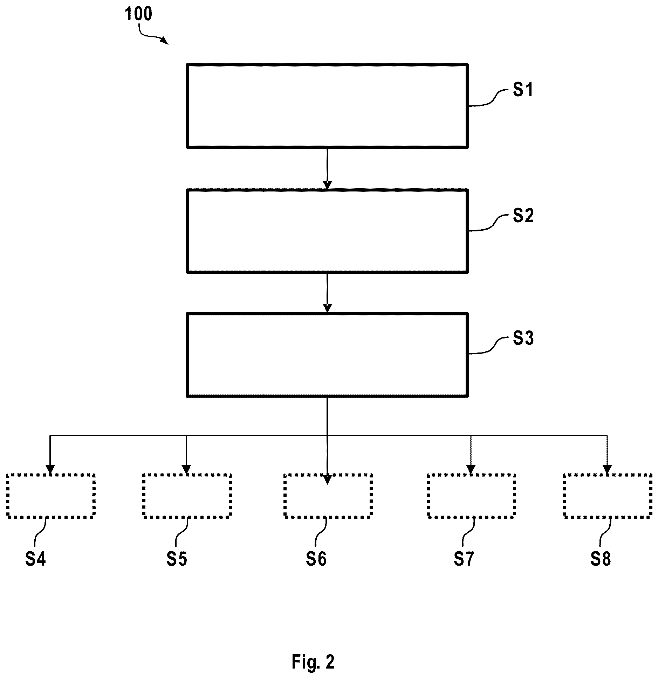

Figur 1 zeigt ein schematisches Blockdiagramm eines Ausführungsbeispiels eines vorliegenden Haushaltsgerätes 100. Das Haushaltsgerät 100 umfasst ein Softwaremodul 102 zum Integrieren S1 (siehe auch Fig. 2) einer Laufzeitumgebung 104 unter Verwendung eines Software Development Kits, SDK 106 auf dem Haushaltsgerät 100. Das Softwaremodul 102 kann grundsätzlich auch als ein Cloudservice und/oder als Serverservice ausgebildet sein. Das Softwaremodul 102 stellt mindestens eine Schnittstelle 108 zu einer Gerätesoftware 110 des Haushaltsgerätes 100 über das SDK 106 bereit. Durch das Softwaremodul 102 ist somit eine Drittsoftware 112 unter Verwendung der mindestens einen Schnittstelle 108 implementierbar und/oder ausführbar.

Die Drittsoftware 112 ist dabei unabhängig von der Gerätesoftware 110 in der Laufzeitumgebung 104 ausführbar. Die Drittsoftware 112 kann eine Gerätehersteller-Software 114 sein, die von der Gerätesoftware 110 getrennt ist. Die Drittsoftware 112 kann eine Partner-Software 116 sein. Die Drittsoftware 112 kann eine Drittanbietersoftware 118 sein.

Die Gerätesoftware 110 umfasst vorliegend ein Benutzeroberflächenmodul 120 (Ul-Modul), ein Kommunikationsmodul 122, ein Geräte-Steuerungsmodul 124 und ein Sensorik-Modul 126.

Das Benutzeroberflächenmodul 120 kann vorzugsweise dazu eingerichtet sein, dass die Drittsoftware 112 unter Verwendung der Schnittstelle 108 zur Anzeige von Inhalten, zur Erstellung von Popups und/oder Menü-Items und/oder Bildschirminhalten und/oder zur Erzeugung von Überblendungen und/oder Überlagerungen und/oder zur Ausbildung einer eigenen Menüstruktur und/oder eines eigenen App-Inhaltes und/oder zu einer Interaktion mit dem Benutzeroberflächenmodul 120 ausgebildet ist.

Das Kommunikationsmodul 122 kann der Drittsoftware 112 unter Verwendung der Schnittstelle 108 einen Zugriff auf eine Kommunikationsinfrastruktur, wie z.B. NRF und/oder Wi-Fi, zu ermöglichen.

Das Geräte-Steuerungsmodul 124 kann der Drittsoftware 112 unter Verwendung der Schnittstelle 108 eine (eingeschränkte) Steuerung des Haushaltsgerätes 100 ermöglichen. Dabei ist eine Nutzung / Steuerung der Gerätefunktionen, ein Anpassen von Parametern des Haushaltsgerätes möglich, wobei gewährleistet wird, dass die Sicherheitsfunktionen intakt bleiben und Sicherheitsbeschränkungen nicht umgangen werden können.

Das Sensorik-Modul 126 kann der Drittsoftware 112 unter Verwendung der Schnittstelle 108 einen Zugriff auf zumindest Teile der Sensordaten des Haushaltsgerätes aufweisen, wobei das Haushaltsgerät beispielhaft einen Gerätesensor 128 umfassen kann, der als Temperatursensor und/oder Luftfeuchtigkeitssensor und/oder Strommesssensor und/oder Wasserverbrauch-Messsensor und/oder Zählerstand-Messsensor ausgebildet sein kann.

Wie aus Fig. 2 hervorgeht, weist das Verfahren ein Integrieren S1 der Laufzeitumgebung 104 unter Verwendung eines Software Development Kits, SDK, 106 auf dem Haushaltsgerät 100 auf. Ferner weist das Verfahren ein Bereitstellen S2 der mindestens einen Schnittstelle 108 zu der Gerätesoftware 110 des Haushaltsgerätes 100 über das SDK 106 auf. Ebenfalls weist das Verfahren ein Implementieren und/oder Ausführen S3 der Drittsoftware 112 unter Verwendung der mindestens einen Schnittstelle 108 auf, wobei die Drittsoftware 112 unabhängig von der Gerätesoftware 110 in der Laufzeitumgebung 104 ausführbar ist.

Optional kann das Verfahren ein Zugreifen S4 durch die Drittsoftware 112 über die mindestens eine Schnittstelle 108 auf mindestens eine Funktion und/oder einen, insbesondere einstellbaren, Geräteparameter des Haushaltsgerätes 100 aufweisen, wobei hierzu eine Kommunikation mindestens mit dem Geräte-Steuerungsmodul 124 bevorzugt ist.

Optional kann das Verfahren ein Abfragen S5 durch die Drittsoftware 112 über die mindestens eine Schnittstelle 108 auf einen Gerätestatus des Haushaltsgerätes 100 aufweisen, wobei hierzu eine Kommunikation mindestens mit dem Kommunikationsmodul 122 bevorzugt ist.

Optional kann das Verfahren ein Zugreifen S6 durch die Drittsoftware 112 über die mindestens eine Schnittstelle 108 auf Sensorinformationen eines Gerätesensors 128 des Haushaltsgerätes 100 aufweisen, wobei hierzu eine Kommunikation mindestens mit dem Sensorik-Modul 126 bevorzugt ist.

Optional kann das Verfahren ein Steuern und/oder Anpassen S7 durch die Drittsoftware 112, über die mindestens eine Schnittstelle 108 einer Funktion des Haushaltsgerätes 100 aufweisen, wobei hierzu eine Kommunikation mindestens mit dem Geräte-Steuerungsmodul 124 bevorzugt ist.

Optional kann das Verfahren ein Verwenden S8 eines akustischen und/oder optischen Signalgebers 130 des Haushaltsgerätes 100 durch die Drittsoftware 112 über die mindestens eine Schnittstelle 108 bzw. das SDK 106 aufweisen, wobei hierzu eine Kommunikation mindestens mit dem Benutzeroberflächenmodul 120 und/oder dem Kommunikationsmodul 122 bevorzugt ist.

### Bezugszeichenliste

- 100: Haushaltsgerät
- 102: Softwaremodul
- 104: Laufzeitumgebung
- 106: Software Development Kit, SDK
- 108: Schnittstelle
- 110: Gerätesoftware
- 112: Drittsoftware
- 114: Gerätehersteller-Software
- 116: Partner-Software
- 118: Drittanbietersoftware
- 120: Benutzeroberflächenmodul
- 122: Kommunikationsmodul
- 124: Geräte-Steuerungsmodul
- 126: Sensorik-Modul
- 128: Gerätesensor
- 130: Signalgeber

- S1: Verfahrensschritt
- S2: Verfahrensschritt
- S3: Verfahrensschritt
- S4: Verfahrensschritt
- S5: Verfahrensschritt
- S6: Verfahrensschritt
- S7: Verfahrensschritt
- S8: Verfahrensschritt

## Patentansprüche

1. Verfahren zur Implementierung und/oder Ausführung einer Drittsoftware (112, 114, 116, 118) auf einem Haushaltsgerät (100), umfassend die Schritte:
Integrieren (S1) einer Laufzeitumgebung (104) unter Verwendung eines Software Development Kits, SDK, (106) auf dem Haushaltsgerät (100),
Bereitstellen (S2) mindestens einer Schnittstelle (108) zu einer Gerätesoftware (110, 120, 122, 124, 126) des Haushaltsgerätes (100) über das SDK (106), und
Implementieren und/oder Ausführen (S3) einer Drittsoftware (112, 114, 116, 118) unter Verwendung der mindestens einen Schnittstelle (108), wobei die Drittsoftware (112, 114, 116, 118) unabhängig von der Gerätesoftware (110, 120, 122, 124, 126) in der Laufzeitumgebung (104) ausführbar ist.

2. Verfahren nach Anspruch 1, das ferner ein Zugreifen (S4) durch die Drittsoftware (112, 114, 116, 118) über die mindestens eine Schnittstelle (108) auf mindestens eine Funktion und/oder einen, insbesondere einstellbaren, Geräteparameter des Haushaltsgerätes (100) aufweist.

3. Verfahren nach Anspruch 1 oder 2, das ferner ein Abfragen (S5) durch die Drittsoftware (112, 114, 116, 118) über die mindestens eine Schnittstelle (108) auf einen Gerätestatus des Haushaltsgerätes (100) aufweist.

4. Verfahren nach einem der vorhergehenden Ansprüche, das ferner ein Zugreifen (S6) durch die Drittsoftware (112, 114, 116, 118) über die mindestens eine Schnittstelle (108) auf Sensorinformationen eines Gerätesensors (128) des Haushaltsgerätes (100) aufweist.

5. Verfahren nach einem der vorhergehenden Ansprüche, das ferner ein Steuern und/oder Anpassen (S7) durch die Drittsoftware (112, 114, 116, 118) über die mindestens eine Schnittstelle (108) einer Funktion des Haushaltsgerätes (100) aufweist.

6. Verfahren nach einem der vorhergehenden Ansprüche, wobei die Laufzeitumgebung (104) und/oder das SDK (106) einen Eingriff in die Gerätesoftware (110, 120, 122, 124, 126) und/oder eine Änderung in Einstellungen der Gerätesoftware (110, 120, 122, 124, 126) und/oder des Haushaltsgerätes (100) durch eine Sandboxing-Technik und/oder ein Berechtigungsmanagement und/oder durch eine API-Governance- und Sicherheitsrichtlinie und/oder durch Virtualisierung und Containerisierung und/oder durch eine digitale Signatur- und Integritätsprüfung und/oder durch eine Einschränkung durch einen Read-only Zugriff und/oder durch eine Protokollierung und Überwachung und/oder durch eine Separierung von Benutzer- und Systemprozessen und/oder durch eine Kapselung von Gerätefunktionen und/oder durch einen Firmware-Hooks und Schutzmechanismus verhindert.

7. Verfahren nach einem der vorhergehenden Ansprüche, das ferner ein Verwenden (S8) eines akustischen und/oder optischen Signalgebers (130) des Haushaltsgerätes (100) durch die Drittsoftware (112) über die mindestens eine Schnittstelle (108) und/oder das SDK (106).

8. Verfahren nach einem der vorhergehenden Ansprüche, wobei das SDK (106) und die Laufzeitumgebung (104) durch stufenweises Rollout (Canary Deployment) und/oder Blue-Green Deployment und/oder A/B-Testing und/oder automatisierte Updates und/oder Delta-Updates und/oder Rollback-Mechanismen und/oder zentrale Verwaltung und Monitoring und/oder Konsistenzprüfungen vor dem Rollout und/oder Feature Toggles (Feature Flags) und/oder Edge- oder P2P-Deployment und/oder Geräte- und Nutzersegmentierung und/oder containerisierte Bereitstellung ein Rollout-Verfahren unterstützen.

9. Verfahren nach einem der vorhergehenden Ansprüche, wobei das SDK (106) eine Bibliothek und/oder ein Framework und/oder eine Dokumentation und/oder eine API und/oder ein Entwicklungswerkzeug und/oder eine Entwicklungsumgebung und/oder einen Sicherheitsmechanismus und/oder eine Plattformunterstützung und/oder ein Template und/oder ein Testing- und Monitoring-Tool und/oder ein Installations- und Konfigurationsskript aufweist.

10. Verfahren nach einem der vorhergehenden Ansprüche, wobei die Laufzeitumgebung (104) eine virtuelle Maschine und/oder eine Container-basierte Umgebung und/oder eine Sandbox-Umgebung und/oder eine modulare Architektur und/oder eine ereignisgesteuerte Architektur und/oder Unterstützung für Multithreading und/oder ein Ressourcenmanagement und/oder eine Speicherverwaltung und/oder eine Sicherheitsisolation und/oder eine Schnittstellenverwaltung und/oder Protokollierungs- und Überwachungsfunktionen und/oder eine Fehlerbehandlung und/oder eine API-Integration und/oder eine Unterstützung für plattformübergreifende Kompatibilität und/oder eine Erweiterbarkeit durch Plug-ins aufweist.

11. Computerprogrammprodukt, umfassend Befehle, die bei der Ausführung des Verfahrens nach einem der Ansprüche 1 bis 10 durch einen Computer bewirken, dass der Computer das Verfahren nach einem der Ansprüche 1 bis 10 ausführt.

12. Computerlesbares Medium, auf dem das Computerprogrammprodukt nach dem vorhergehenden Anspruch gespeichert ist.

13. Haushaltsgerät (100), umfassend ein Softwaremodul (102) zum Integrieren einer Laufzeitumgebung (104) unter Verwendung eines Software Development Kits, SDK, auf dem Haushaltsgerät (100), wobei das Softwaremodul (102) mindestens eine Schnittstelle (108) zu einer Gerätesoftware (110, 120, 122, 124, 126) des Haushaltsgerätes (100) über das SDK bereitstellt, und wobei durch das Softwaremodul (102) eine Drittsoftware (112, 114, 116, 118) unter Verwendung der mindestens einen Schnittstelle (108) implementierbar und/oder ausführbar ist, wobei die Drittsoftware (112, 114, 116, 118) unabhängig von der Gerätesoftware (110, 120, 122, 124, 126) in der Laufzeitumgebung (104) ausführbar ist.

14. Haushaltsgerät (100) nach Anspruch 13, wobei das Softwaremodul (102) als ein Cloudservice und/oder als Serverservice ausgebildet ist.
